(19) Europäisches Patentamt
European Patent Office
Office européen des brevets

(11) **EP 4 156 665 B1**

(12) **EUROPEAN PATENT SPECIFICATION**

(45) Date of publication and mention
of the grant of the patent:
**30.10.2024   Bulletin 2024/44**

(21) Application number: **21198261.6**

(22) Date of filing: **22.09.2021**

(51) International Patent Classification (IPC):
***H04M 3/436*** *(2006.01)*

(52) Cooperative Patent Classification (CPC):
**H04M 3/436;** H04M 2201/40; H04M 2201/41;
H04M 2203/6027

(54) **TECHNIQUES TO ENABLE PROTECTION AGAINST VOICE PHISHING OF A TELEPHONE CALL**

TECHNIKEN ZUR ERMÖGLICHUNG DES SCHUTZES GEGEN SPRACH-PHISHING EINES TELEFONANRUFS

TECHNIQUES PERMETTANT DE SE PROTÉGER CONTRE LE HAMEÇONNAGE VOCAL D'UN APPEL TÉLÉPHONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.03.2023   Bulletin 2023/13**

(73) Proprietor: **Deutsche Telekom AG
53113 Bonn (DE)**

(72) Inventor: **Kim, Ju Hoon
14947 Nuthe-Urstromtal (DE)**

(74) Representative: **Braun-Dullaeus Pannen
Emmerling
Patent- & Rechtsanwaltspartnerschaft mbB
Platz der Ideen 2
40476 Düsseldorf (DE)**

(56) References cited:
**KR-A- 20170 006 288     US-A1- 2018 097 836**

## Description

The invention relates to a method, a speech-analyzing-unit, a telecommunication device, and a further user device to enable protection against voice phishing of a telephone call, wherein the telephone call is performed by a user.

Voice phishing, or vishing, is the use of telephony (often Voice over IP telephony) to conduct phishing attacks. Landline telephone services have traditionally been trustworthy; terminated in physical locations known to the telephone company, and associated with a bill-payer. Now however, phishing fraudsters often use modern Voice over IP (VoIP) features such as caller ID spoofing and automated systems (IVR) to impede detection by law enforcement agencies. Voice phishing is typically used to steal credit card numbers or other information used in identity theft schemes from individuals.

Usually, voice phishing attacks are conducted using automated text-to-speech systems that direct a victim to call a number controlled by the attacker, however some use live callers. Posing as an employee of a legitimate body such as the bank, police, telephone or internet provider, the fraudster attempts to obtain personal details and financial information regarding credit cards, bank accounts (e.g. the PIN), as well as personal information of the victim. With the received information, the fraudster might be able to access and empty the accounts or commit identity fraud. Some fraudsters may also try to persuade the victim to transfer money to another bank account or withdraw cash to be given to them directly. Callers also often pose as law enforcement or as an Internal Revenue Service employee. Scammers often target immigrants and the elderly, who are coerced to wire hundreds to thousands of dollars in response to threats of arrest or deportation.

Voice Phishing comes in various forms. There are various methods and various operation structures for the different types of phishing. Usually, scammers will employ social engineering to convince victims of a role they are playing and to create a sense of urgency to leverage against the victims.

Voice phishing has unique attributes that separate the attack method from similar alternatives such as email phishing. With the increased reach of mobile phones, phishing allows for the targeting of individuals without working knowledge of email but who possess a phone, such as the elderly. The historical prevalence of call centers that ask for personal and confidential information additionally allows for easier extraction of sensitive information from victims due to the trust many users have while speaking to someone on the phone. Through voice communication, phishing attacks can be personable and therefore more impactful than similar alternatives such as email. The faster response time to an attack attempt due to the increased accessibility to a phone is another unique aspect, in comparison to an email where the victim may take longer time to respond. A phone number is difficult to block and scammers can often simply change phone numbers if a specific number is blocked and often find ways to overcome rules and regulations

Voice phishing attacks can be difficult for victims to identify because legitimate institutions such as banks sometimes ask for sensitive personal information over the phone. Phishing schemes may employ pre-recorded messages of notable, regional banks to make them indistinguishable from legitimate calls. Additionally, victims, particularly the elderly, may forget or do not know about scammers' ability to modify their caller ID, making them more vulnerable to voice phishing attacks.

In that context, the state-of-the-art describes techniques like

- caller ID spoofing detection techniques such as STIR and SHAKEN as described in https://en.wikipedia.org/wiki/STIR/SHAKEN,

- blacklisting approaches: for example; app-based approach that verifies the ID of the caller (caller ID) with known scam numbers collected from user reports;

- machine learning approaches to detect voice phishing based on pattern detection as described in "Voice Recognition and Document Classification-Based Data Analysis for Voice Phishing Detection" by Jeong-Wook Kim, Gi-Wan Hong, and Hangbae Chang; http://hcisj.com/data/file/article/202101281/hcis.pdf;

- KR 2017 0006288 A and US 2018/097836 A1 also show techniques to enable protection against voice phishing of a telephone call;

In the view of above, it is an object of the present invention to provide techniques that enable an efficient protection against voice phishing of a telephone call. This object is solved by the features of the independent claims.

The features of the various aspects of the invention described below or the various examples of implementation may be combined with each other, unless this is explicitly excluded or is technically impossible.

According to a first aspect of the invention, a method is provided according to claim 1.

It is further noted that if the speech-analyzing-unit is implemented as software within the telecommunication device then the input data link is to be understood as a typical communication mean within the telecommunication device to provide data to an algorithm;

This provides the advantage of detecting and preventing voice phishing crime by deeply inspecting the context of the telecommunication conversations in an automatic way that shifts the burden of detecting voice phishing from the user to the detecting algorithm. This is beneficial since it is hard to educate the telecommunication users whenever a new scam method is developed or evolved from the known scam methods. However, if a telecommunication service provider collects and spreads the new pattern of such scams in the form of the patterns of possible voice phishing to the databases of the speech-analyzing-unit, new patterns of such scams can be detected efficiently. Furthermore, those patterns of possible voice phishing can be automatically translated into other languages and being provided accordingly to the speech-analyzing-unit. This has the advantage, that typically scam first happens within a region that uses a single language and is then adapted to other countries that use different languages. The translation enables that protection is provided as fast as possible. Furthermore, the translation does not need not to be limited to spoken languages but can also include programming languages in which the speech patterns are written. Such languages can be XML, JSON, YMAL, etc. Hence, the invention will be especially beneficial for protecting elderly and children who are more prone to be victimized than others by such criminal acts.

In a practical way, the speech-analyzing-unit can be designed as a hardware and/or a software embodiment. If the data communication device is a smartphone, the speech-analyzing-unit can be loaded onto the smartphone as an app or can be integrated into the operating system of the smartphone. In these cases, the speech-analyzing-unit can be implemented as software within the smartphone, which enables an efficient standalone solution against voice phishing that could even work if the smartphone has no connection to the Internet. However, voice phishing also happens if the user uses a non-smartphone, for example at home. Such a non-smart-phone is typically not able to load and execute apps, in these cases, the speech-analyzing-unit can be designed as an external hardware unit that analyzes the telephone call accordingly. A possible implementation is within a residual gateway through which voice over IP telephone calls transverse so that it is possible to design the external speech-analyzing-unit in a way that it has access to the audio signals of the telephone call. Another scenario is that some users also like to make telephone calls, especially within the homes, using the telephone in a hands-free mode. In that case, the external speech-analyzing-unit could be placed anywhere within the room of the user and having a microphone as a input data link for the audio input and a sound speaker for the output data link that gives a warning to the user if voice phishing has been detected. If the speech-analyzing-unit is implemented as being software within the telecommunication device, it can have its own processor or use the processor of the data communication device to run the algorithm. If the speech-analyzing-unit is implemented as external hardware, typically has its own processor to run the algorithm.

Preferably, the algorithm transmits the text elements and/or other information about the telephone call via the output data link to a service of a service provider for further investigation.

This provides the advantage that the additional resources of the service provider can be used to analyze the text elements with regard to voice phishing. Typically, the resources of the service provider are more powerful and are regularly updated so that they provide the best detection results.

In an embodiment, the service provider investigates a geolocation of the telephone call and/or if the telephone call is listed on a blacklist.

This provides the advantage of providing a different approach in assessing if the telephone call is voice phishing. In particular, investigating a geolocation typically can only be performed by the service provider because the telecommunication device of the user cannot access the necessary information to identify the geolocation of a telephone call. The service provider can send the results of his analysis back to the telecommunication device. The results can be used by the telecommunication device along with its own results to determine if the telephone call is voice phishing or the results can tell the telecommunication device independently that voice phishing is happening.

In an embodiment, the speech-analyzing-unit performs the voice phishing detection for a predefined period of time, in particular for 10 seconds.

This provides the advantage of saving the computational resources of the telecommunication device and/or the service provider because typically the relevant voice phishing patterns are occurring at the beginning of a telephone call. The speech-analyzing-unit is configured to set the predefined period of time to different values.

In an embodiment, the different specific speech patterns are analyzed separately by the algorithm to avoid overfitting effects.

In mathematical theories, overfitting takes place if there are too many possible explanations parameters for a given set of data points. Mixing all the different speech patterns with the various parameters into one a single analysis could lead to the same effect, namely that the algorithm finds different patterns that are related to different speech parameter sets and concludes that voice phishing has occurred even if the matching of the text elements with those parameters happened only by chance. Therefore, the feature of analyzing the different speech separately avoids overfitting, which could detect voice phishing even if actually no phishing has occurred.

According to a second aspect of the invention, a speech-analyzing-unit is provided according to claim 6.

The advantages of the speech-analyzing-unit correspond to the advantages described in the context of the method above except in cases where this is not technically applicable.

If the speech-analyzing-unit is not being implemented on the telecommunication device, wherein the telecommunication device can be a smartphone or a standard telephone, it could be implemented on a Residential Gateway for example a router of the user or could be designed as an adapter plug that is connected with the telephone line. In the latter case, the speech-analyzing-unit comprises appropriate input channels for the telephone line and outputs channels to signal if voice phishing was detected by its algorithm that runs on the processor of the adapter plug.

According to a third aspect of the invention, a telecommunication device according to claim 7 is provided.

The advantages of the telecommunication device correspond to the advantages described in the context of the method above except in cases where this is not technically applicable.

In the following, preferred implementation examples of the present invention are explained with reference to the accompanying figure:

Fig. 1: shows an overview of a communication system configured to enable protection against voice phishing of a telephone call.

Fig. 2: shows at least parts of an algorithm designed to determine voice phishing speech patterns.

Fig. 3: shows a first table of a speech pattern that is designed to detect a voice phishing pattern called "unknown- caller".

Fig. 4: shows a second table of a speech pattern that is designed to detect a voice phishing pattern called "IRS impersonation scam".

Fig. 5: shows a third table of a speech pattern that is designed to detect a voice phishing pattern called "Hollywood Con Queen scam".

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

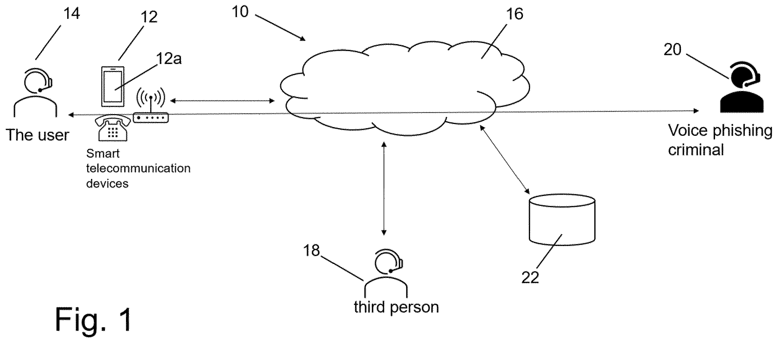

Fig. 1 shows an overview of a communication system 10 configured to enable protection against voice phishing of a telephone call.

The communication system 10 comprises a telecommunication device 12 of a user 14, wherein the user 14 makes phone calls with the telecommunication device 12. The telecommunication device 12 can be designed as a smart phone, a smart watch, a non-smart phone and/or other devices with a telephone functionality. The telecommunication device 12 comprises a speech-analyzing-unit 12a on which an algorithm is implemented to determine possible voice phishing. The speech-analyzing-unit 12a can be designed as a hardware or a software embodiment.

The phone calls of the user 14 are transmitted over a communication network 16, in particular telephone communication network 16, to other parties. In particular, the other parties can be a third person 18 or a voice phishing criminal 20. By means of the communication network 16 the telecommunication device 12 can communicate with a server of a service provider 22.

In the following, the steps of the method are described:
The user 14 or the third person 18 as a user's legal guardian 18 agrees on the service and installation of the anti-phishing software on the user's smart telecommunication device 12. The service provider 22 transfers and/or periodically updates the software with patterns, in particular speech patterns, of known voice phishing scenarios. When the voice call is established, the software recognizes the words and sentences spoken by the caller/callee, and determines if the pattern of the voice call corresponds to known phishing voice patterns.

When a call is incoming and the caller's number is not unknown to the user 14 (e.g., contact list and/or call history), the speech-analyzing-unit 12a starts to listens to the conversation and can detect voice phishing by matching the spoken words with the one or more voice phishing patterns. If voice phishing is determined, the telecommunication device 12 warns the user about the possible voice phishing trial (with the background voice and text on the display). The speech-analyzing-unit 12a can create the corresponding data signals in a way that the telecommunication device warns the user 14. Alternatively, and/or additionally, the user 14 may request for further analysis of the caller 20 (e.g. by pressing number on the dial pad or on the display screen).

If the user 14 requests the further analysis of the voice call, the telecommunication device 12 informs an anti-phishing service of the service provider 22. The anti-phishing service further investigates the caller (e.g., geolocation, blacklist, etc). If the user has a legal guardian 18, he can be informed with a SMS that voice phishing was determined.

The service provider 22 informs the legal guardian 18, or the user 14, if there's no legal guardian by playing background speech and/or showing text on the display, about the investigation result.

The user 12 and/or legal guardian can request for the termination of the voice call. Some of the processes described above can be performed with or without the explicit request from the user 14 (depending on the service policy, legal issue, and/or legal guardian's agreement).

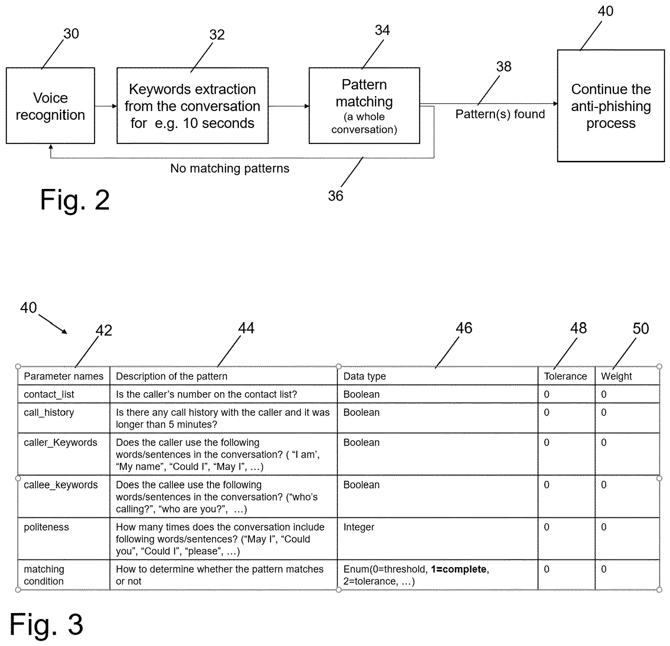

Fig. 2 shows at least parts of an algorithm designed to determine voice phishing speech patterns.

Step 30 comprises voice recognition of the voice call, wherein the speech of the caller can be transcribed into text elements.

In step 32 keyword extraction from the conversation takes place for example for 10 seconds. Typically, the speech patterns related to voice phishing can be extracted within the first seconds of the voice call. Restricting the keyword extraction to a predefined time limit saves computational resources.

In step 34 pattern matching, in particular of the whole conversation, can be performed. If no matching patterns are found 36, then the algorithm goes back in a loop-wise fashion into step 30. If the matching pattern is found 38, then the anti-phishing process continues in step 40. In particular, the further analysis can be requested from the service provider 22.

A speech pattern may dependent on one or multiple other patterns. For example, "pattern-of-the-telemarketing-fraud" pattern can require the matching result of "pattern-of-unknown-caller" pattern

As an example, conversation patterns with an unknown person may include (but not limited to) following parameters described in Fig. 3.

Fig. 3 shows a first table 40 of a speech pattern that is designed to detect a voice phishing pattern called "unknown- caller". The first table comprises a first column 42 with parameter names, wherein the parameters describe different categories of the content that can be extracted from the voice call and/or other properties like a contact list, a call history, keywords of the caller, keywords of the callee, politeness and a matching condition, wherein the matching condition describes how the patterns shall be evaluated to determine voice phishing. One or multiple entries of the first column 42 can be predefined by the service provider.

The invention describes three options to evaluate the voice call - these options are also called matching conditions. These options are, wherein the numbering starts with zero, 0= threshold, 1 = complete, and 2 = tolerance. A speech pattern that corresponds to the first table 40 is evaluated with the option 1 = complete.

The second column 44 of the first table 40 comprises a description of the parameter names of the corresponding rows in the first column 42. For example, the description of the pattern of the parameter name "contact_list" is: Is the number of the caller on the contact list?

The third column 46 of the first table 40 comprises a data type of the parameter names of the corresponding rows in the first column 42. For example, the data type of the parameter name "contact_list" is: Boolean. A possible definition can be that True corresponds to 1 and False corresponds to 0.

The fourth column 48 of the first table 40 comprises a tolerance value of the parameter names of the corresponding rows in the first column 42. For example, the tolerance value of the parameter name "contact_list" is: 0.

The fifth column 50 of the first table 40 comprises a weight value of the parameter names of the corresponding rows in the first column 42. For example, the weight value of the parameter name "contact-list" is: 0.

The voice phishing patterns can be described in dynamic ways with various description languages such as XML, JSON, YAML, etc.

If matching_condition=1, the sum of values of the specified parameters (i.e., caller_keywords, callee_keywords, politeness) determines whether the conversation falls into the speech pattern described by the first table 40 or not.

If the sum of determined values is higher than the sum of the tolerances of the first table 40, the pattern matching yields True, otherwise False. The weight doesn't play a role in this case. In this context, true means, that voice phishing is detected and false means that no voice phishing was detected.

In the following, the option matching_condition = 1 is being described in greater detail:

If matching_condition=1, the sum of values of the specified parameters determines whether the conversation falls into the pattern or not. If the sum of values is higher than the sum of their tolerances, the pattern matching yields True, otherwise False. The weight does not play a role in this case.

An equation used to determine whether the conversation pattern matches to the voice phishing pattern:

True (the conversation pattern matches the scam pattern) if $\sum_{i=1}^{n} Value_i > \sum_{i=1}^{n} Tolerance_i$, wherein i is the index number of the i-th parameter, n is the number of required parameters;

False (the conversation pattern does not match the scam pattern) if $\sum_{i=1}^{n} Value_i \leq \sum_{i=1}^{n} Tolerance_i$.

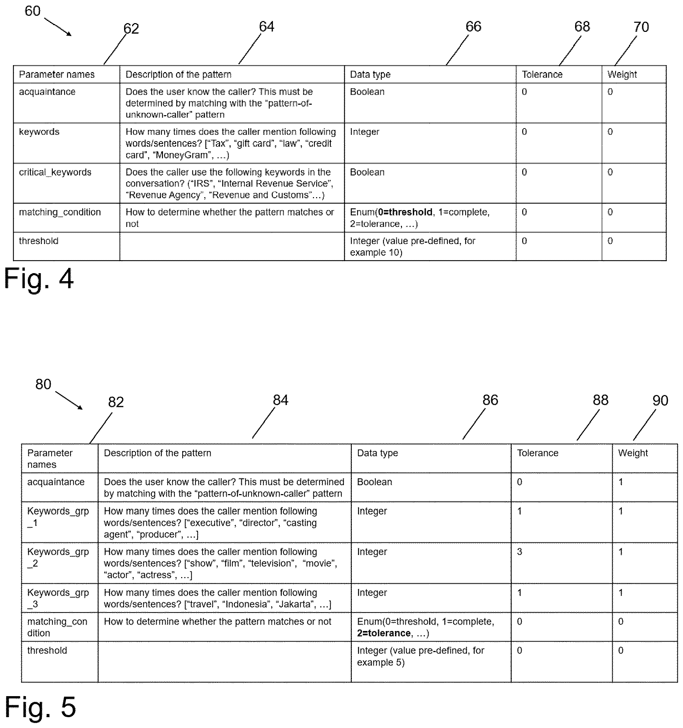

Fig. 4 shows a second table 60 of a speech pattern that is designed to detect a voice phishing pattern called "IRS impersonation scam". IRS impersonation scams involve scammers targeting American taxpayers by pretending to be Internal Revenue Service (IRS) collection officers. The scammers operate by placing disturbing official-sounding calls to unsuspecting citizens, threatening them with arrest and frozen assets if thousands of dollars are not paid immediately, usually via gift cards or money orders. According to the IRS, over 1,029,601 Americans have received threatening calls, and $29,100,604 have been reported lost to these call scams as of March, 2016. The problem has been assigned to the Treasury Inspector General for Tax Administration.

The second table 60 comprises a first column 62 with parameter names, wherein the parameters describe different categories of the content that can be extracted from the voice call and/or other properties like an acquaintance, keywords, critical keyword, matching condition and a threshold, wherein the matching condition describes how the patterns shall be evaluated to determine voice phishing. A speech pattern that corresponds to the second table 60 is evaluated with the matching condition = 0 = threshold.

The second column 64 of the second table 60 comprises a description of the parameter names of the corresponding rows in the first column 62. For example, the description of the pattern of the parameter name "acquaintance" is: Does the user know the caller?

The third column 66 of the second table 60 comprises a data type of the parameter names of the corresponding rows in the first column 62. For example, the data type of the parameter name "acquaintance" is: Boolean.

The fourth column 68 of the second table 60 comprises a tolerance value of the parameter names of the corresponding rows in the first column 62. For example, the tolerance value of the parameter name "acquaintance" is: 0.

The fifth column 70 of the second table 60 comprises a weight value of the parameter names of the corresponding rows in the first column 62. For example, the weight value of the parameter name "acquaintance" is: 1.

One or multiple entries of the first column 62 can be predefined by the service provider.

In the following, the option matching_condition = 0 is being described in greater detail:

If matching_condition=0, the sum of evaluation points of specific parameters determines whether the conversation falls into the voice phishing pattern.

If the sum is higher than the pre-defined value of the threshold parameter, this pattern matching yields True (i.e., voice phishing found), False otherwise. The tolerance and weight do not play roles in this case.

An equation used to determine whether the conversation pattern matches to the voice phishing pattern: True, the speech pattern of the voice call is determined as a voice phishing pattern:

$$\sum_{i=1}^{n} Value_i > Value_{threshold}$$

, wherein i is the index number of the i-th parameter, n is the number of required parameters and $Value_{threshold}$ is the predefined value of the Threshold parameter.

False, the speech pattern of the voice call is not determined as a voice phishing pattern:

$$\sum_{i=1}^{n} Value_i \leq Value_{threshold}$$

.

Fig. 5 shows a third table 80 of a speech pattern that is designed to detect a voice phishing pattern called "Hollywood Con Queen scam".

In this scam, gig workers in the entertainment industry are approached via phone or email by an individual claiming to be an executive, director, casting agent, or producer. The target of the scam is presented with an opportunity to work on a film or television project and is encouraged to travel to Jakarta, Indonesia to scout for locations and participate in meetings. When they arrive, the target is toured around various tourist destinations and cultural sites by a driver who speaks little English. Because of the heavy traffic in Jakarta, the target spends most of their time driving and is frequently told that their schedule has changed and meetings were cancelled. As the target is transported to various locations, they are forced to pay their driver fees with the promise of eventual reimbursement. When targets become upset or frustrated after days of cancelled meetings and driving, they often leave the country early. Throughout the process, the target communicates with the person who invited them to Jakarta, who becomes increasingly irate, demanding, or inappropriate. Targets may not realize they are the target of the scam until returning home and conducting research.

The third table 80 comprises a first column 82 with parameter names, wherein the parameters describe different categories of the content that can be extracted from the voice call and/or other properties like an acquaintance, keywords group 1, keywords group 2, keywords group 3, matching condition and a threshold, wherein the matching condition describes how the patterns shall be evaluated to determine voice phishing. A speech pattern that corresponds to the second table 80 is evaluated with the matching condition = 2 = tolerance.

The second column 84 of the third table 80 comprises a description of the parameter names of the corresponding rows in the first column 82. For example, the description of the pattern of the parameter name "acquaintance" is: Does the user know the caller?

The third column 86 of the third table 80 comprises a data type of the parameter names of the corresponding rows in the first column 82. For example, the data type of the parameter name "acquaintance" is: Boolean.

The fourth column 88 of the third table 80 comprises a tolerance value of the parameter names of the corresponding rows in the first column 82. For example, the tolerance value of the parameter name "acquaintance" is: 0.

The fifth column 90 of the third table 80 comprises a weight value of the parameter names of the corresponding rows in the first column 82. For example, the weight value of the parameter name "acquaintance" is: 1.

One or multiple entries of the first column 82 can be predefined by the service provider.

In the following, the option matching_condition = 2 is being described in greater detail:

When matching_condition=2, the total sum of values (i.e., the sum of values multiplied by their weights) of the specified parameters. If the total sum is greater than the tolerance of this parameter, the pattern matching will yield True (i.e. voice phishing detected), otherwise False (i.e. no voice phishing detected). The parameter with a value that is lower than its tolerance will be ignored in the equation.

True (the conversation pattern matches the scam pattern):

$$\sum_{i=1}^{n}(Value_i * Weight_i) > \sum_{i=1}^{n} Value_{threshold}$$

, where $Value_i$ > $Tolerance_i$, i is the index number of the i-th parameter, n is the number of required parameters, and $Value_{tolerance}$ is the pre-defined value of the Tolerance parameter.

False (the conversation pattern doesn't match the scam pattern): $\sum_{i=1}^{n}(Value_i *$

$Weight_i) \leq \sum_{i=1}^{n} Value_{threshold}$ .

This provides the advantage that an evaluation can be tailored to different voice phishing methods.

The main idea of having multiple different matching conditions is to reduce the chance of false-positive errors. By using different condition of matching, one can increase chance to avoid the false-positive errors. For some cases, the weight is evenly distributed to multiple parameters. In such cases, there are no clear decisive parameters, and they would be equally important. In such cases, the judgement must be made by the overall number of matching appearances. That's why "matching_condition=0 (threshold)" can be used.

For some cases, parameters of a pattern are too ambiguous to use them as decisive parameters. So, one can use matching_condition=1 (complete) and set "tolerance" value on each of the parameters. For example, if a big data analysis finds out that telephone communications contain 5 times "May I" on average, then the tolerance for such keywords can be set to 5.

The matchin_condition=2 is a very harsh condition. Every parameter has its own tolerance values. The value of each parameter will be examined against its tolerance. A parameter that has a smaller value than its tolerance will be ignored in decision making.

**Claims**

1. A method to enable protection against voice phishing of a telephone call performed by a speech-analyzing-unit (12a) that is part of a user's telecommunication device (12), wherein the speech-analyzing-unit (12a) is configured to perform the steps of:

    ○ receiving, by an input data link, parts of the telephone call as audio input
    ○ storing, by a database, speech patterns of possible voice phishing;
    ○ converting, by an algorithm, the audio input to text elements and comparing the text elements to the patterns of possible voice phishing with regard to an occurrence of voice phishing, and triggering countermeasures if voice phishing is detected;
    ○ transmitting, by at least an output data link, the countermeasures to the telecommunication device (12), **characterized in that** the countermeasures comprise a warning that is transmitted to the user of the telecommunication device as a background voice of the telecommunication device.

2. The method of claim 1, wherein the speech-analyzing-unit (12a) is designed as a hardware and/or a software embodiment.

3. The method of claims 1 to 2, wherein a the service provider (22) investigates a geolocation of the telephone call and/or if the telephone call is listed on a blacklist.

4. The method of any of the claims, wherein the speech-analyzing-unit performs the voice phishing detection for a predefined period of time, in particular for 10 seconds.

5. The method of claim 11, wherein different specific speech patterns are analyzed separately by the algorithm to avoid overfitting effects.

6. A speech-analyzing-unit to enable protection against voice phishing of a telephone call performed by a user with a telecommunication device configured to perform the steps of any of the methods 1 to 5.

7. A telecommunication device to enable protection against voice phishing of a telephone call performed by a user, wherein the speech-analyzing-unit of claim 6 is implemented internally within the telecommunication device as a software solution or that the speech-analyzing-unit is provided externally to the telecommunication device as a hardware solution, wherein telecommunication device is configured to perform a countermeasures that comprises a warning as a background voice of the telecommunication device.

**Patentansprüche**

1. Verfahren zum Aktivieren von Schutz gegen Voice-Phishing bei einem Telefonanruf, das von einer Sprachanalyseeinheit (12a) durchgeführt wird, die Teil einer Telekommunikationsvorrichtung (12) eines Benutzers ist, wobei die Sprachanalyseeinheit (12a) dazu eingerichtet ist, die Schritte auszuführen:

    - Empfangen, mittels einer Eingangsdaten-Übertragungseinrichtung, von Abschnitten eines Telefonanrufs als Audioeingangsdaten;
    - Speichern, mittels einer Datenbank, von Sprachmustern möglichen Voice-Phishings;
    - Umwandeln, mittels eines Algorithmus, der Audioeingangsdaten in Textelemente und Vergleichen der Textelemente mit den Mustern möglichen Voice-Phishings in Bezug auf ein Auftreten von Voice-Phishing und Auslösen von Gegenmaßnahmen, falls Voice-Phishing detektiert wird;
    - Übertragen, mittels mindestens einer Ausgangsdaten-Übertragungseinrichtung, der Ge-

genmaßnahmen an die Telekommunikations-vorrichtung (12),

**dadurch gekennzeichnet, dass**
die Gegenmaßnahmen eine Warnung umfassen, die als Hintergrundstimme der Telekommunikationsvorrichtung an den Benutzer der Telekommunikationsvorrichtung übertragen wird.

2. Verfahren nach Anspruch 1, wobei die Sprachanalyseeinheit (12a) als Hardware- und/oder als Software-Ausführungsform ausgestaltet ist.

3. Verfahren nach einem der Ansprüche 1 oder 2, wobei ein Dienstanbieter eine Geoortung des Telefonanrufs untersucht und/oder untersucht, ob der Telefonanruf auf einer Schwarzen Liste geleistet ist.

4. Verfahren nach einem der vorhergehenden Ansprüche, wobei die Sprachanalyseeinheit die Voice-Phishing-Detektion für eine vordefinierte Zeitdauer, insbesondere für 10 Sekunden, durchführt.

5. Verfahren nach Anspruch 11, wobei verschiedene spezifische Sprachmuster von dem Algorithmus separat analysiert werden, um Overfitting-Effekte zu vermeiden.

6. Sprachanalyseeinheit zum Aktivieren von Schutz gegen Voice-Phishing bei einem Telefonanruf, der von einem Benutzer mit einer Telekommunikationsvorrichtung geführt wird, wobei die Sprachanalyseeinheit dazu eingerichtet ist, die Schritte des Verfahrens nach einem der Ansprüche 1 bis 5 durchzuführen.

7. Telekommunikationsvorrichtung zum Aktivieren von Schutz gegen Voice-Phishing bei einem Telefonanruf, der von einem Benutzer durchgeführt wird, wobei die Sprachanalyseeinheit nach Anspruch 6 als Softwarelösung intern innerhalb der Telekommunikationsvorrichtung implementiert ist oder wobei die Sprachanalyseeinheit als Hardwarelösung extern zu der Telekommunikationsvorrichtung bereitgestellt ist, wobei die Telekommunikationsvorrichtung dazu eingerichtet ist, eine Gegenmaßnahme durchzuführen, die eine Warnung als Hintergrundstimme der Telekommunikationsvorrichtung umfasst.

## Revendications

1. Procédé permettant de se protéger contre le hameçonnage vocal d'un appel téléphonique exécuté par une unité d'analyse vocale (12a) qui fait partie d'un dispositif de télécommunication d'utilisateur (12), dans lequel l'unité d'analyse vocale (12a) est configurée pour exécuter les étapes de :

- réception, par une liaison de données d'entrée, de parties de l'appel téléphonique comme entrée audio ;
- mémorisation, par une base de données, de modèles vocaux d'un éventuel hameçonnage vocal ;
- conversion, par un algorithme, de l'entrée audio en éléments de texte et comparaison des éléments de texte avec les modèles d'hameçonnage vocale éventuel en ce qui concerne une occurrence d'hameçonnage vocal et déclenchement de contre-mesures si un hameçonnage vocale est détecté ;
- transmission, par au moins une liaison de données de sortie, des contre-mesures au dispositif de télécommunication (12) ;

**caractérisé en ce que** les contre-mesures comprennent une alerte qui est transmise à l'utilisateur du dispositif de télécommunication comme une voix d'arrière-plan du dispositif de télécommunication.

2. Procédé selon la revendication 1, dans lequel l'unité d'analyse vocale (12a) est conçue comme un mode de réalisation matériel et/ou logiciel.

3. Procédé selon les revendications 1 ou 2, dans lequel un fournisseur de service (22) enquête sur une géolocalisation de l'appel téléphonique et/ou si l'appel téléphonique est listé sur une liste noire.

4. Procédé selon une quelconque des revendications précédentes, dans lequel l'unité d'analyse vocale exécute la détection de hameçonnage vocal pendant une période de temps prédéfinie, en particulier pendant 10 secondes.

5. Procédé selon la revendication 11, dans lequel des modèles vocaux spécifiques différents sont analysés séparément par l'algorithme afin d'éviter des effets d'overfitting.

6. Unité d'analyse vocale permettant de se protéger contre le hameçonnage vocal d'un appel téléphonique passé par un utilisateur avec un dispositif de télécommunication configuré pour exécuter les étapes d'un quelconque des procédés 1 à 5.

7. Dispositif de télécommunication permettant de se protéger contre le hameçonnage vocal d'un appel téléphonique passé par un utilisateur, dans lequel l'unité d'analyse vocale de la revendication 6 est implémenté en interne à l'intérieur du dispositif de télécommunication comme une solution logicielle ou que l'unité d'analyse vocale est fournie en externe au dispositif de télécommunication comme une solution matérielle, dans lequel le dispositif de télécommunication est configuré afin d'exécuter une contre-mesure qui comprend une alerte comme une voix d'arrière-plan du dispositif de télécommunication.

14 12 12a 10 16 20

The user

Smart
telecommunication
devices

Voice phishing
criminal

18 third person

22

## Fig. 1

Fig. 2

| Parameter names | Description of the pattern | Data type | Tolerance | Weight |
|---|---|---|---|---|
| contact_list | Is the caller's number on the contact list? | Boolean | 0 | 0 |
| call_history | Is there any call history with the caller and it was longer than 5 minutes? | Boolean | 0 | 0 |
| caller_Keywords | Does the caller use the following words/sentences in the conversation? ( "I am', "My name", "Could I", "May I", …) | Boolean | 0 | 0 |
| callee_keywords | Does the callee use the following words/sentences in the conversation? ("who's calling?", "who are you?", …) | Boolean | 0 | 0 |
| politeness | How many times does the conversation include following words/sentences? ("May I", "Could you", "Could I", "please", …) | Integer | 0 | 0 |
| matching condition | How to determine whether the pattern matches or not | Enum(0=threshold, **1=complete**, 2=tolerance, …) | 0 | 0 |

Fig. 3

| Parameter names | Description of the pattern | Data type | Tolerance | Weight |
|---|---|---|---|---|
| acquaintance | Does the user know the caller? This must be determined by matching with the "pattern-of-unknown-caller" pattern | Boolean | 0 | 0 |
| keywords | How many times does the caller mention following words/sentences? ["Tax", "gift card", "law", "credit card", "MoneyGram", …) | Integer | 0 | 0 |
| critical_keywords | Does the caller use the following keywords in the conversation? ("IRS", "Internal Revenue Service", "Revenue Agency", "Revenue and Customs"…) | Boolean | 0 | 0 |
| matching_condition | How to determine whether the pattern matches or not | Enum(**0=threshold**, 1=complete, 2=tolerance, …) | 0 | 0 |
| threshold | | Integer (value pre-defined, for example 10) | 0 | 0 |

# Fig. 4

| Parameter names | Description of the pattern | Data type | Tolerance | Weight |
|---|---|---|---|---|
| acquaintance | Does the user know the caller? This must be determined by matching with the "pattern-of-unknown-caller" pattern | Boolean | 0 | 1 |
| Keywords_grp _1 | How many times does the caller mention following words/sentences? ["executive", "director", "casting agent", "producer", …] | Integer | 1 | 1 |
| Keywords_grp _2 | How many times does the caller mention following words/sentences? ["show", "film", "television", "movie", "actor", "actress", …] | Integer | 3 | 1 |
| Keywords_grp _3 | How many times does the caller mention following words/sentences? ["travel", "Indonesia", "Jakarta", …] | Integer | 1 | 1 |
| matching_con dition | How to determine whether the pattern matches or not | Enum(0=threshold, 1=complete, **2=tolerance**, …) | 0 | 0 |
| threshold | | Integer (value pre-defined, for example 5) | 0 | 0 |

# Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   KR 20170006288 A
*   US 2018097836 A1

**Non-patent literature cited in the description**

*   **JEONG-WOOK KIM ; GI-WAN HONG ; HANGBAE CHANG.** *Voice Recognition and Document Classification-Based Data Analysis for Voice Phishing Detection,* *http://hcisj.com/data/file/article/202101281/hcis.pdf*